# EUROPEAN PATENT APPLICATION

(11) **EP 0 596 842 A1**
(43) Date of publication of application: **11.05.1994**
(21) Application number: 93830443.3
(22) Date of filing: 03.11.1993
(51) Int. Cl.: B24D 7/16, F16B 37/06

(54) **Sanding disk for superfinishing machines including improved coupling means**

(30) Priority: 06.11.1992 IT MI920970
(71) Applicant: TAF S.r.l., I-20052 Monza (Milano) (IT)
(72) Inventor: Cortese, Fabrizio, I-20052 Monza (Milano) (IT)
(74) Representative: Cicogna, Franco

(57) **Abstract**

The present invention relates to a sanding disk for superfinishing machines, including improved coupling means, which disk comprises a disk body (1) having a central hole (3) and supporting, on a face thereof, an annular region (2) made of an abrasive material.

The main feature of the invention is that, in the above hole (3), there is provided a threaded bush (10) engageable with the threaded end piece or mandrel of a superfinishing machine and which can be made rigid with the disk body (1) by means of a mechanical deformation of an axial portion (11) of the threaded bush (10), on an annular abutment element (20) which can be applied on the opposite face of the disk body.

## Description

### BACKGROUND OF THE INVENTION

The present invention relates to a sanding disk for superfinishing machines including improved coupling means.

As is known, there are at present commercially available a lot of different sanding or abrasive disks, to be used on superfinishing machines, including a disk body made of a plastic material thereon is applied an abrading material annular region.

Such a construction causes several problems related mainly to the disposal of a worn sanding disk, since it is not possible to reuse its plastic material, which material can not be practically separated by the residues of abrading or abrasive material.

### SUMMARY OF THE INVENTION

Accordingly, the aim of the present invention is to overcome the above mentioned broblem by providing a sanding disk which, while holding unaltered the advantage of a quick connection to a superfinishing machine, does not generate problems related to its disposal.

Within the scope of the above mentioned aim, a main object of the present invention is to provide such a sanding disk which includes improved coupling means specifically designed for providing a firm and safe coupling of the disk to a super- finishing machine.

Yet another object of the present invention is to provide such a sanding disk which is very reliable and safe in operation, can be easily made starting from easily available elements and materials, and which, moreover, is very competitive from a mere economic standpoint.

According to one aspect of the present invention, the above mentioned aim and objects, as well as yet other objects, which will become more apparent hereinafter, are achieved by a sanding disk for superfinishing machines, including improved coupling means, comprising a disk body having a central hole and supporting, on a face thereof, an abrasive material annular region, characterized in that said disk further comprises, in said hole, a threaded bush which can be engaged with a threaded end piece of a superfinishing machine and can be made rigid with said disk body by a mechanical deformation of an axial portion of said threaded bush on an annular abutment element which can be applied on the opposite face of said disk body.

### BRIEF DESCRIPTION OF THE DRAWINGS

Further characteristics and advantages of the invention will become more apparent hereinafter from the following detailed disclosure of a sanding disk for superfinishing machines, which is illustrated, by way of an indicative, but not limitative, example, in the accompanying drawings, where:
Figure 1 is a schematic perspective view illustrating the sanding disk according to the present invention;
Figure 2 is a disassembled cross-sectional view illustrating a sanding disk according to the present invention provided with an annular abutment element comprising a washer member;
Figure 3 illustrates the above sanding disk in an assembled condition and seen in cross-section;
Figure 4 is a disassembled or exploded perspective view illustrating the threaded bush and washer;
Figure 5 is an exploded cross-sectional view illustrating a sanding disk including a flat washer:
Figure 6 is a cross-sectional view of the sanding disk of Figure 5 in an assembled condition;
Figure 7 is a perspective view illustrating the flat washer;
Figure 8 is an exploded cross-sectional view illustrating a sanding disk including a crowned washer;
Figure 9 illustrates the sanding disk of Figure 8 as cross-sectioned and in an assembled condition; and
Figure 10 illustrates, by a perspective view, the crowned washer.

### DESCRIPTION OF THE PREFERRED EMBODIMENT

With reference to the number references of the figures of the accompanying drawings, the sanding disk for superfinishing machines, including improved coupling means, according to the present invention, comprises a disk body, generally indicated at the reference number 1, which can have a flat or frustum-of-cone shaped configuration and is advantageously made of a metal material such as aluminium, steel, stainless steel or the like, or being made of a pressed impregnaged paper material, or of a glass fibre reinforced fabric impregnated by suitable resins and pressed, or any other materials having a set mechanical strength.

On a face of the disk body 1 there is provided an annular or ring-like region 2, made of an abrasive material, which is formed by any suitable known methods.

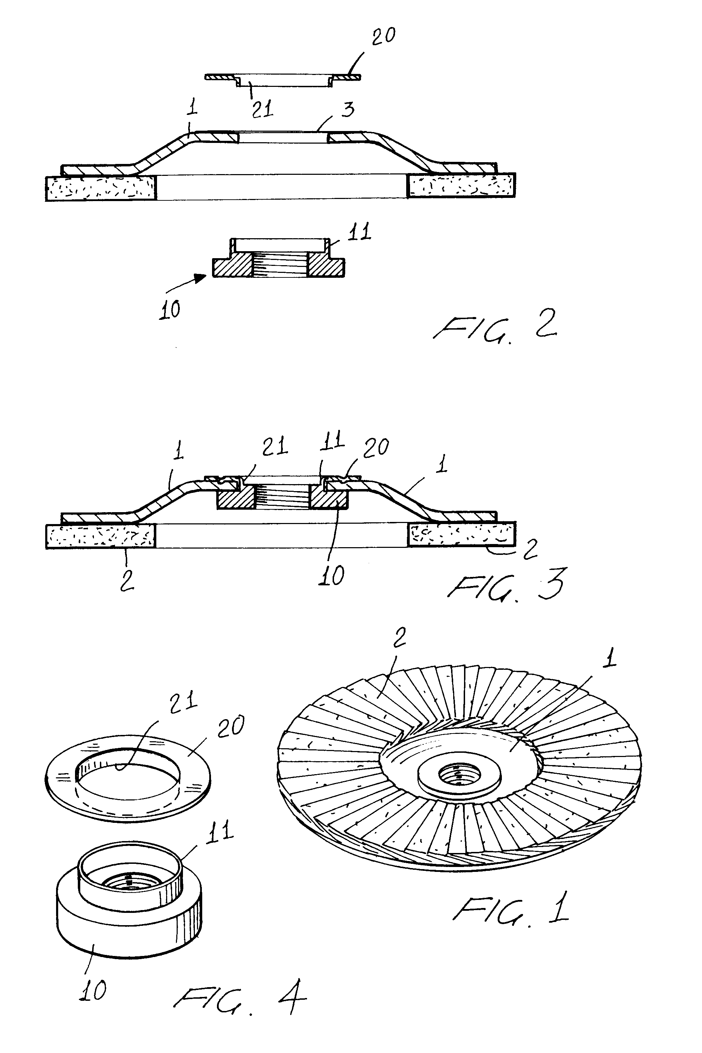

As shown, the sanding disk 1 is provided with a hole 3 in which can be applied, as shown in figures 1 to 4, a threaded bush 10 having an axial edge portion 11 engaging inside the hole 3.

More specifically, the connection is performed by means of an annular abutment element, comprising an edges washer, indicated at the reference number 20, which is provided with an axial stub 21 engaging in the hole 3 and thereon is riveted and upset the axial edge 11 of the threaded bush so as to provide a rigid coupling.

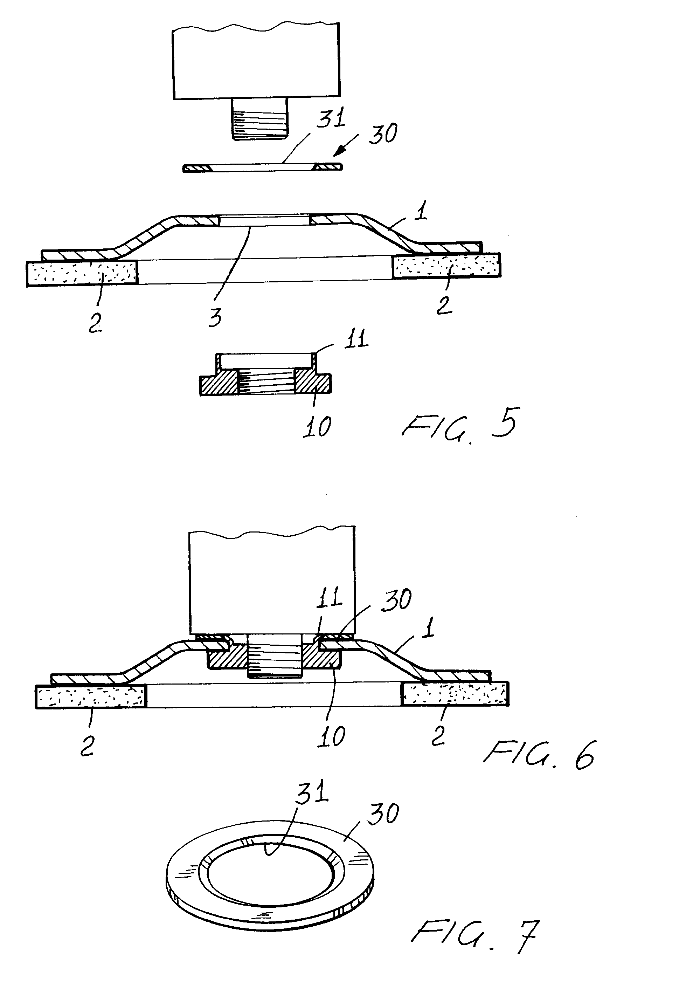

With reference to figures 5 to 7, it should be apparent that the connection is herein made by a flat washer, indicated at the reference number 30, which comprises an axial hole 31, having a tron- cated cone tapering portion, operating as a coupling element for the axial edge 11 which is upset.

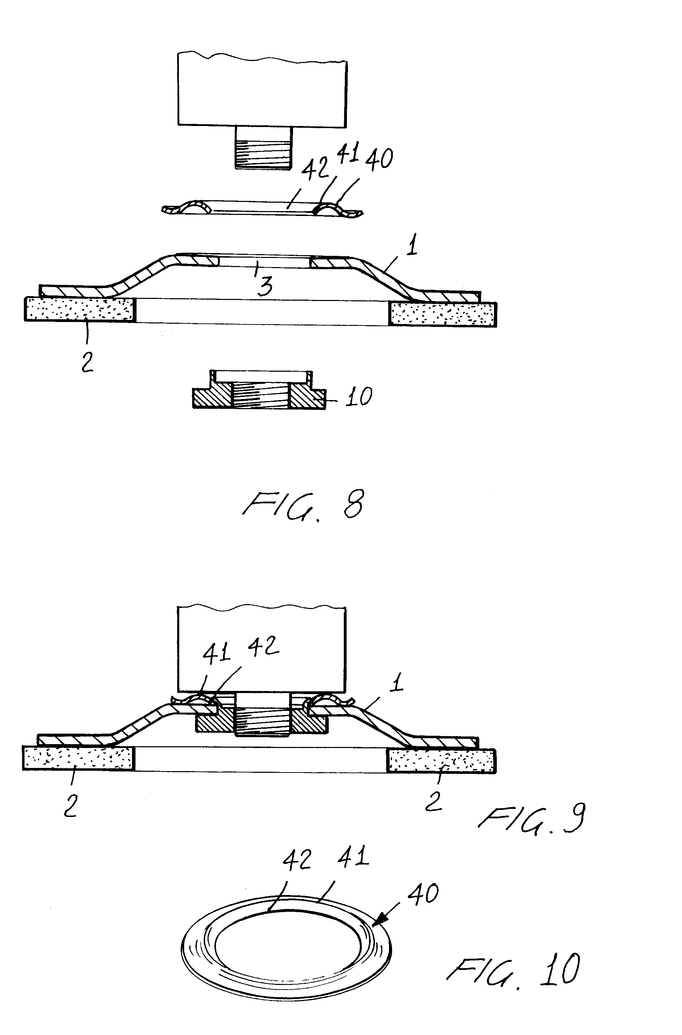

As shown in figures 8 to 10, there is herein provided a crowned washer 40, including an annular rib 41 mating with a central tapering portion 42 on which there is upturned, by means of a riveting or upset operation, the axial stub, or axial edge, 11 of the threaded bush 10.

In order to improve the driving characteristics of the disk, the bush can also be provided with a key element, or it can be coupled to the disk, the bush can also be provided with a key element, or it can be coupled to the disk by means of a polygonal hole and, moreover, it is also possible to provide coupling tabs or pins, or the bush can also be glued to the disk or be directly embedded therein as the disk is formed.

The bush with the threaded inner hole can be made of a metal material such as aluminium, or of a plastic material or any other suitable materials.

With the disclosed construction, it is also possible to provide for the use of washer having edge portions for anchoring the disk, which can be applied to said disk as the latter is made, said disk, for example, being made of a glass fibre reinforced cloth material, impregnated by plastic materials and hot pressed.

In this connection it should be pointed out that within the scope of the invention is to be considered also the above mentioned approach in which a washer is not provided.

From the above disclosure it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the inventive idea.

## Claims

1. A sanding disk for superfinishing machines, including improved coupling means, comprising a disk body having a central hole and supporting, on a face thereof, an abrasive material annular region, characterized in that said disk further comprises, in said hole, a threaded bush which can be engaged with a threaded end piece of a super-finishing machine and can be made rigid with said disk body by a mechanical deformation of an axial portion of said threaded bush on an annular abutment element which can be applied on the opposite face of said disk body.

2. A sanding disk for superfinishing machines, according to Claim 1, characterized in that said threaded bush comprises, at an axial end portion thereof, an axial edge which can be riveted or upset on said annular abutment element.

3. A sanding disk for superfinishing machines, according to Claims 1 and 2, characterized in that said annular abutment element comprises a washer having a central stub thereon said axial edge is riveted.

4. A sanding disk for superfinishing machines, according to one or more of the preceding claims, characterized in that said annular abutment element comprises a flat washer, having a tapering central hole, thereon is riveted the axial edge of said threaded bush.

5. A sanding disk for superfinishing machines, according to one or more of the preceding claims, characterized in that said annular abutment element comprises a crowned washer having an axial tapering portion thereon is riveted the axial edge of the threaded bush.

6. A sanding disk for superfinishing machines, according to one or more of the preceding claims, characterized in that said threaded bush is applied to said sanding disk by a connection which does not include any washers.
